# EUROPEAN PATENT APPLICATION

(11) **EP 4 617 084 A1**
(43) Date of publication of application: **17.09.2025**
(21) Application number: 25163277.4
(22) Date of filing: 12.03.2025
(51) Int. Cl.: B60C 23/04

(54) **A TIRE MONITORING SYSTEM**

(30) Priority: 12.03.2024 GB 202403571
(71) Applicant: Airbus Operations Limited, Bristol BS34 7PA (GB); Airbus Operations GmbH, 21129 Hamburg (DE); Meggitt SA, 1752 Villars-sur-Glâne (CH)
(72) Inventor: BILL, Andrew, Bristol, BS34 7PA (GB); LUTZELSCHWAB, Marc, 1752 Villars-sur-Glâne (CH); MARWEDEL, Stephen, 21129 Hamburg (DE); MARX, Yves, 1752 Villars-sur-Glâne (CH)
(74) Representative: EIP

(57) **Abstract**

Disclosed is a tire monitoring system (500) that includes a tire monitoring device (100) and a remote device (102). The tire monitoring (100) device includes a processor (102), a memory (114), and a first wireless communication interface (104). The remote device (200) includes a second wireless communication interface (210). The processor (102) is configured to monitor the tire monitoring device (100) to determine unauthorised interactions with the tire monitoring device (100), cause a log of determined unauthorised interactions to be stored in the memory (114), and cause transmission of a signal encoding the log to the remote device (200) via the first (104) and second (210) wireless communication interfaces.

## Description

### TECHNICAL FIELD

The present invention relates to a tire monitoring system.

### BACKGROUND

Checking tire pressure is an important part of the maintenance of a vehicle. Tire pressures should be maintained at predetermined pressures to ensure that a tire performs as intended by the manufacturer. Incorrect tire pressure can lead to a tire failing, perhaps bursting and causing damage to the vehicle and/or a loss of control.

### SUMMARY

A first aspect of the present invention provides a tire monitoring system comprising: a tire monitoring device comprising: a processor; a memory; and a first wireless communication interface; and a remote device comprising a second wireless communication interface; wherein the processor is configured to: monitor the tire monitoring device to determine unauthorised interactions with the tire monitoring device; cause a log of determined unauthorised interactions to be stored in the memory; and cause transmission of a signal encoding the log to the remote device via the first and second wireless communication interfaces.

The tire monitoring system may function in a manner similar to a conventional avionics system, without needing the tire monitoring device to be connected to any conventional monitoring system, such as an avionics system on-board an aircraft. In particular, the combination of the tire monitoring device and the remote device can be utilised to determine unauthorised interactions with the tire monitoring device, or components thereof, and to provide such information to an operator of the remote device such that an appropriate remedial or maintenance action can be taken.

Optionally, an unauthorised interaction with the tire monitoring device comprises an attempted interaction with the tire monitoring device by an untrusted source. Optionally, an unauthorised interaction with the tire monitoring device comprises a denial-of-service attack on the tire monitoring device.

Optionally, the processor is configured to cause transmission of the signal encoding the log to the remote device in response to a download request from the remote device.

Optionally, the remote device is configured to transmit, via the second wireless communication interface, a tire check request to the tire monitoring device; the processor is configured to cause a memory capacity signal indicative of remaining capacity of the memory to be transmitted, via the first wireless communication interface, to the remote device; the remote device is configured to transmit, via the second wireless communication interface and based on receipt of the memory capacity signal, a download request to the tire monitoring device; and the processor is configured to cause transmission, via the first wireless communication interface and in response to receipt of the download request, transmission of the signal encoding the log to the remote device.

Optionally, the processor is configured to cause the memory capacity signal to be transmitted to the remote device where an available capacity of the memory for storing further entries of the log is less than or equal to 30%. Optionally, the processor is configured to cause the memory capacity signal to be transmitted to the remote device where an available capacity of the memory for storing further entries of the log is less than or equal to 25%, less than or equal to 20%, less than or equal to 15%, or less than or equal to 10%.

Optionally, the remote device is configured to transmit the download request in response to an operator input on the remote device. Optionally, the remote device comprises a user input mechanism, for example one or more of a touchscreen, a touch pad, and a plurality of buttons.

Optionally, the processor is configured to cause each determined unauthorised interaction in the log to be stored in the memory alongside an associated timestamp indicative of a time at which the determined unauthorised interaction occurred.

Optionally, the tire monitoring device comprises a counter, and the associated timestamp comprises a value of the counter at a time at which the determined unauthorised interaction occurred.

Optionally, the remote device is configured to, in response to receipt of the signal encoding the log, correlate each value of the counter with a corresponding date and time.

Optionally, the processor is configured to, once the signal encoding the log has been transmitted to the remote device, cause deletion of the log from the memory.

Optionally, the remote device comprises a display, and the remote device is configured to provide, using the display and in response to receipt of the signal encoding the log, a maintenance message to an operator of the remote device.

Optionally, the maintenance message comprises a message that directs an operator of the remote device to a section of an aircraft maintenance manual.

Optionally, the maintenance message comprises a message that directs an operator of the remote device to transmit the signal to a remote processing system.

Optionally, the tire monitoring system comprises a remote processing system, the remote device is configured to transmit the signal, or a further signal derived from the signal encoding the log, to the remote processing system, and the remote processing system is configured to process the signal to determine a maintenance action associated with at least one of the determined unauthorised interactions with the tire monitoring device. Optionally, the remote device is configured to transmit the signal to the remote processing system in response to an operator input on the remote device. Optionally, the remote processing system is located remotely from the remote device. Optionally, the remote processing system is configured to schedule a maintenance procedure based on the determined maintenance action.

Optionally, the tire monitoring system comprises an aircraft having a tire, and the tire monitoring device is mounted to the tire.

Optionally, the tire monitoring device is not communicatively coupled to an avionics system of the aircraft.

A second aspect of the present invention provides a method comprising, at a tire monitoring device: monitoring the tire monitoring device to determine unauthorised interactions with the tire monitoring device; causing a log of determined unauthorised interactions to be stored in a memory of the tire monitoring device; and causing transmission of a signal encoding an indication of the log to a remote device a wireless communication interface of the tire monitoring device.

Optionally, the method comprises causing transmission of the signal encoding the log to the remote device in response to a download request from the remote device.

Optionally, the method comprises: receiving, via the wireless communication interface, a tire check request sent to the tire monitoring device by the remote device; transmitting, from the tire monitoring device and in response to the tire check request, a memory capacity signal indicative of remaining capacity of the memory to the remote device via the wireless communication interface; receiving, via the wireless communication interface, a download request from the remote device based on receipt of the memory capacity signal by the remote device; and transmitting, via the wireless communication interface and in response to receipt of the download request, the signal encoding the log from the tire monitoring device to the remote device.

Optionally, the method comprises transmitting, via a further wireless communication interface of the remote device, the tire check request from the remote device to the tire monitoring device. Optionally, the method comprises transmitting, via the further wireless communication interface, the download request from the remote device to the tire monitoring device.

Optionally, the method comprises transmitting the memory capacity signal to the remote device where an available capacity of the memory of the tire monitoring device for storing further entries of the log is less than or equal to 30%.

A third aspect of the present invention provides a tire monitoring device comprising: a processor; a memory; and a wireless communication interface; wherein the processor is configured to: monitor the tire monitoring device to determine unauthorised interactions with the tire monitoring device; cause a log of determined unauthorised interactions to be stored in the memory; and cause transmission of a signal encoding the log to a remote device via the wireless communication interface.

A fourth aspect of the present invention provides a data carrier comprising machine readable instructions that, when executed, cause a processor of a tire monitoring device to: monitor the tire monitoring device to determine unauthorised interactions with the tire monitoring device; cause a log of determined unauthorised interactions to be stored in a memory of the tire monitoring device; and cause transmission of a signal encoding the log to a remote device via a wireless communication interface of the tire monitoring device.

Optional features of aspects of the present invention may be equally applied to other aspects of the present invention, where appropriate.

### BRIEF DESCRIPTION OF THE DRAWINGS

Embodiments of the invention will now be described, by way of example only, with reference to the accompanying drawings, in which:
Figure 1 shows a schematic view of an aircraft tire monitoring device;
Figure 2 shows a schematic view of a remote device;
Figure 3 shows a schematic view of an aircraft;
Figure 4 shows a first method according to an example;
Figure 5 shows a schematic view of a tire monitoring system; and
Figure 6 shows a second method according to an example.

### DETAILED DESCRIPTION

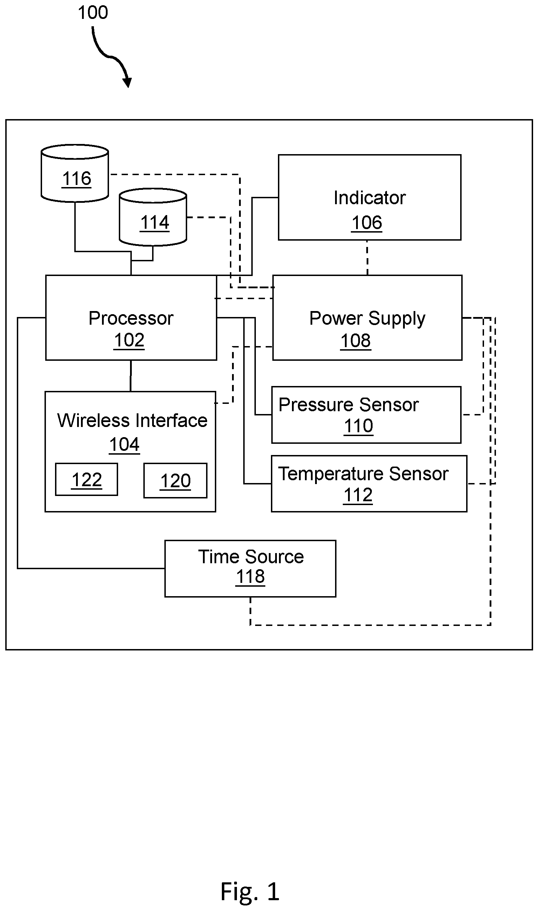

An aircraft tire monitoring device 100 in accordance with an example of the present invention is illustrated schematically in Figure 1, in the form of a tire pressure monitoring device. The tire monitoring device 100 is configured for mounting on a wheel, for example by a mechanical connection to an opening on the wheel providing access to the tire. The tire monitoring device 100 includes a processor 102, a wireless communication interface 104, an indicator 106, a power supply 108, a pressure sensor 110, a temperature sensor 112, a first storage 114, a second storage 116, and a time source 118.

The processor 102 may be any suitable processing device including a microprocessor with one or more processing cores. In use, the processor 102 coordinates and controls the other components and may be operative to read and/or write computer program instructions and data from/to the storage 114, 116. The processor 102 may be optimized for low power operation or have at least one processing core optimized for low power operation in some examples. Further operational details of the processor 102 will be discussed in more detail hereinafter.

The wireless communication interface 104 is connected to the processor 102 and is used to both transmit and received data from the other devices of the tire pressure sensor system. In this example, the wireless communication interface 104 includes two transceivers, 120, 122 which both use different wireless technology. A first of the transceivers 120 is provided for relatively long-range communication, up to about 50m or about 100m. For example, the first transceiver 120 may use a communication standard suitable for mobile devices, such as IEEE 802.15.1 (Bluetooth), IEEE 802.15.4, IEEE 802.11 (Wi-Fi) on either the 2.4 GHz or 5 GHz Industrial Scientific and Medical (ISM) bands or a Wireless Avionics Intra-Communications (WAIC) standard. The first transceiver 120 also includes an encryption module for encrypting sent data and decrypting received data, for example according to the Advanced Encryption Standard (AES) utilizing pre-shared keys. A second of the transceivers 122 is provided for relatively short-range communications. For example, the second transceiver 122 may use a standard according to IEEE 802.15, such as IEEE 802.15.4, RFID or Near Field Communication (NFC). The second transceiver 122 may operate over a range of less than 5m, less than 3m, less than 1m, less than 50 cm, less than 25 cm, less than 10 cm, less than 5cm, less than 1cm or requiring contact between devices. Like the first transceiver 120, the second transceiver 122 also includes an encryption module for encrypting sent data and decrypting received data.

In some examples, a single wireless transceiver may be provided in the wireless communication interface 104. In that case the single transceiver may use relatively short range or relatively long range communication, or adjust the range (such as by controlling transmit power) as required.

The indicator 106 is connected to the processor 102 and controlled by the processor 102 to provide indications to a user of the tire monitoring device 100. In this example the indicator 106 is an LED, but in other examples the indicator is another form of light, a display, such as an LCD or e-ink display, or any other form of visual indication. In other examples, the indicator 106 is an audible indicator, such as a buzzer, beeper, speaker or any other sound generating component. In further examples, the indicator 106 can comprise both audible and visual indication components. The indicator 106 provides at least first and second indications, for example a first colour and a second colour of emitted light. Further indications can also be provided, such as solid or flashing light. The tire monitoring device 100 has a housing (not shown) and the indicator 106 can provide an indication outside the housing, for example the LED may be mounted external to the housing or visible through the housing, or sound may be able to be emitted from within the housing.

The power supply 108 provides power to the elements of the tire monitoring device 100. In this example, the power supply 108 is a Lithium battery with power sufficient to run the sensor in normal operation for about 2 to 3 years. In other examples the power supply 108 may comprise a power harvesting system, for example harvesting vibration and/or electromagnetic radiation to charge a capacitor or battery which is then used to power the device.

The pressure sensor 110 is connected to processor 102 and may be any suitable sensor for measuring pressure, for example a capacitive sensor. Similarly, the temperature sensor 112 is connected to processor 102 and may be any suitable sensor for measuring temperature, such as thermocouple. The temperature sensor 112 may be arranged to measure the temperature of the wheel or the temperature of the gas inside the tire directly. Where the temperature sensor 112 measures the temperature of the wheel, this can be processed to determine the temperature of the gas in the tire. For example, an algorithm or look-up table may be used.

The connection of the pressure sensor 110 and temperature sensor 112 to the processor 102 may be digital, providing a digital representation of the measured pressure and/or temperature from an Analogue to Digital Convertor (ADC) in the sensor itself, or analogue, in which case the processor may include an ADC to sample the received signal. Including both a pressure sensor 110 and a temperature sensor 112 may be useful to determine a temperature compensated pressure value. Although this example includes a pressure sensor 110 and a temperature sensor 112, in other examples the temperature sensor 112 may be omitted, or further sensors may be included.

This example includes two storage elements 114 and 116, which can individually or collectively be referred to as local memory of the aircraft tire monitoring device 100. The first storage 114 is non-volatile rewritable storage in this example, such as flash memory which can retain data without requiring applied power. Other examples may include volatile storage, which is kept powered by the power supply, or combinations of read-only and rewritable storage. Storage 114 is connected to the processor 102 and used to store both computer program instructions for execution by the processor and data, such as data from the pressure sensor 110 or received over the wireless communication interface 104. In some examples, storage 114 may store a history of pressure and/or temperature readings sensed by the pressure sensor 110 and the temperature sensor 112. For example, the previous ten days readings may be stored, with the newest data replacing the oldest once the storage is full.

The second storage 116 is secure storage to which write and/or read access is restricted, for example only accessible to certain processes running on processor 102. Configuration data, such as wireless encryption keys, can be stored in the second storage 116. In other examples, a single storage may be provided, or storage 114 and 116 may be provided in a single physical device with a logical partitioning between storage 114 and storage 116.

The time source 118 comprises a counter. The time source 118 provides a value indicative of current time for indicating the time at which a measurement was taken. For example, the processor 100 may cause a current value of the time source 118 to be associated with each pressure and temperature measurement when it is stored in the storage 116 for use as a timestamp.

A timestamp is a counter value, where the counter is initialized at a point in the use of the tire monitoring device 100, such as when the tire monitoring device 100 is first put into service.

It is not required for the time source 118 to be synchronized with other tire monitoring devices on the same aircraft because the methods described herein can be applied to the data of each monitoring device independently. When data of more than one tire monitoring device is required to be viewed on a common timeline, timestamps can be converted to a common reference timeline. For example, the current time when a mandated tire pressure measurement takes place may be recorded along with a corresponding value of the timestamp and used to convert.

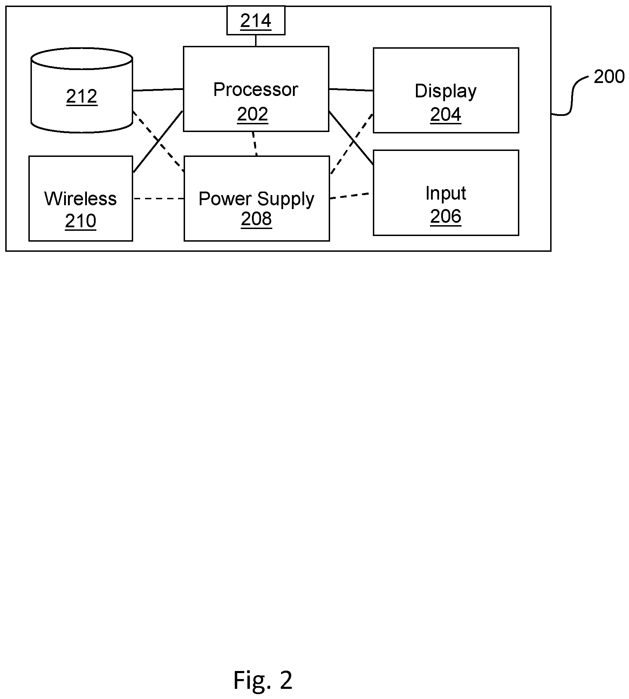

Figure 2 shows a schematic representation of a remote device 200 for use in conjunction with the tire monitoring device 100 of Figure 1. The remote device 200 includes a processor 202, a display 204, an input system 206, a power supply 208, a wireless communication interface 210, a storage 212 and wired communication interface 214. In this example the remote device 200 is a mobile device, such as a cellular phone or a tablet computer.

The processor 202 is any suitable processing device, for example a multipurpose microprocessor, system-on-chip, or system in package, which may include one or more processing cores. Processor 202 is connected to the display 204, such an LCD, OLED or e-ink display, to display information to a user of the remote device 200. Further operational details of the processor 202 will be discussed in more detail hereinafter.

The input system 206 includes a touch screen interface in this example, allowing a user to interact with the remote device 200 by touching user interface elements on the screen. The input system 206 may include one or more buttons in addition to the touch screen, as well as other input devices, such as a microphone for speech recognition and a camera for image input. Other examples may not include a touch screen interface.

The remote device is powered by power supply 208, which is a rechargeable Lithium battery in this example. Other examples may use alternative power supplies, such as other battery technologies, mains power, or energy harvesting, such as solar power.

A wireless interface 210 is included for the remote device 200 to communicate with other devices, such as the tire monitoring device 100. In this example, a single wireless interface 210 is provided which is configured to communicate with the tire monitoring device 100. For example, a relatively long-range wireless communication technology can be used, such as one conforming to IEEE 802.15.1, IEEE 802.15.4 or IEEE 802.11. This allows the remote device 200 to interact with the tire monitoring device 100 from a relatively long range.

In other examples, the remote device 200 may be provided with multiple wireless communication interfaces or transceivers, operating with different wireless technologies, such as at least two of IEEE 802.15.1, IEEE 802.15.4, IEEE 802.11 (Wi-Fi), WAIC, RFID and NFC. For example, the remote device 200 may have two transceivers with one having a longer communication range than the other.

The storage 212 includes a non-volatile element, such as flash memory, and a volatile element, such as RAM. The non-volatile element is used to store operating system software and application software. In this example, the remote device 200 runs standard operating system software and is loaded with application software to interact with the tire monitoring device 100. In order to restrict access to the tire monitoring device 100, the application software may be provided from a secure source and not available to the general public, and/or require credentials to be entered before operating.

A wired communication interface 214 is provided for connection to a computing system. The wired communication interface 214 can be, for example, a serial data connection, such as Universal Serial Bus (USB), a parallel data connection or a network connection, such as Ethernet. The wired communication interface 214 may allow the remote device 200 to communicate values and/or other status information read from the tire monitoring device 100 to a computing system, for example to store long term trends and assist fleet management. Alternatively, or additionally, the wired communication interface 214 may be used for communication with the computing system. In some examples, the remote device 200 may not include a wired communication interface, and the above-mentioned communication can be achieved using the wireless communication interface 214.

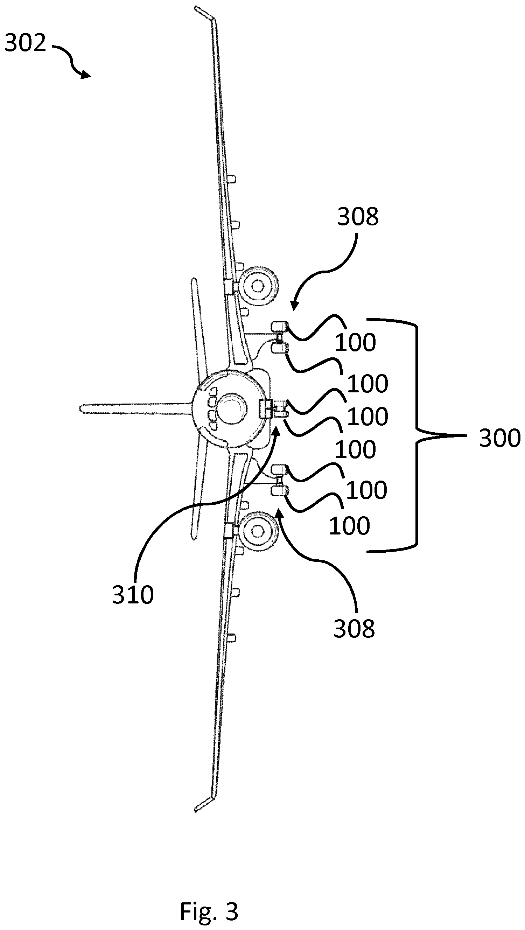

Figure 3 shows a schematic representation of a tire pressure sensor network 300 comprising a plurality of tire monitoring devices 100 installed in an aircraft 302. The aircraft 302 comprises main landing gear 308 and nose landing gear 310. The aircraft 302 may be used in conjunction with any of the methods described herein. Tire monitoring devices 100 are installed on each wheel of the main landing gear 308 and nose landing gear 310.

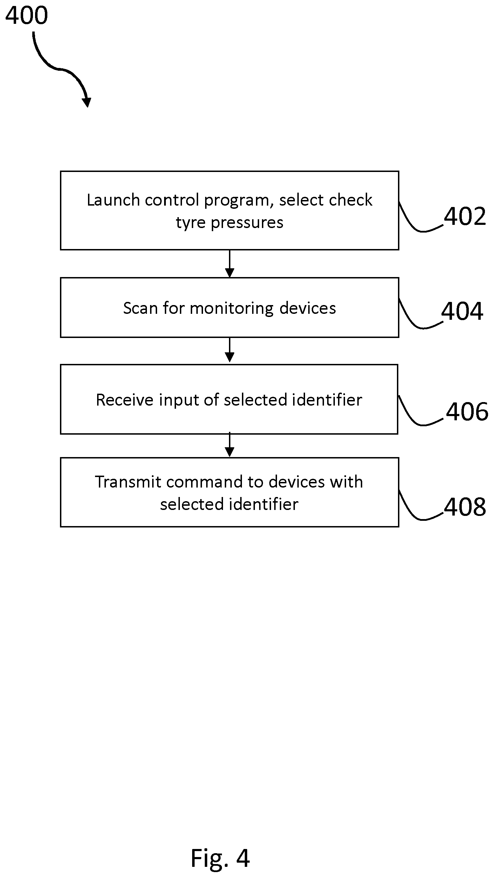

Figure 4 shows a flow chart of a tire pressure check process 400 that can be used with the tire pressure sensor network 300 of Figure 3. First, at block 402, a user launches the tire monitoring control application on the remote device 200. During initialization of the application, a check is made that the wireless communication interface 210 for communication with the tire monitoring devices 100 is active on the remote device 200 and the user is prompted to activate if it is not active.

Next, at block 404, the remote device 200 scans for tire monitoring devices 100 in range. For example, the remote device 200 may send out a probe over the wireless communication interface 210. At the same time, the tire monitoring devices 100 are periodically waking and listening for the probe of the remote device, and/or periodically waking and broadcasting respective identification signals, which include aircraft identifiers, such as a tail identifier of an aircraft to which the tire monitoring device 100 is attached.

The scanning may comprise establishing direct, point-to-point contact with each tire monitoring device 100, or contact through the network 300 of tire monitoring devices 100, for example through an access point, a master device, or any device in a mesh network.

Depending on the communication range and location, tire monitoring devices associated with more than one aircraft may be detected. For example, several aircraft may be in the same hanger in range of the remote device 200. At block 406, input is received of a selected identifier.

Next, at block 408, a request or command is sent to the tire monitoring devices 100 corresponding to the selected identifier to cause them to connect to the remote device 200, for example so that they can receive a request from the remote device 200 to carry out a tire pressure check.

Throughout the process of Figure 4, communication between the remote device 200 and the tire monitoring devices 100 may be secure, for example encrypted by a network key. The network key for the communication with the remote device may be different from the network key used for communication between the sensor devices to enhance the security of the system.

Security may be increased by using a wireless communication technology with a limited transmission distance when exchanging secure keys, for example 802.11 (Wi-Fi) standards may allow transmission over a distance of 50m or further in clear space. This alone may be sufficient to provide increased security because physical proximity is required to intercept communications. In some examples, security may be increased by reducing transmission power when encryption keys are transmitted compared to transmission of the encrypted data itself, requiring closer proximity for the initial key exchange process.

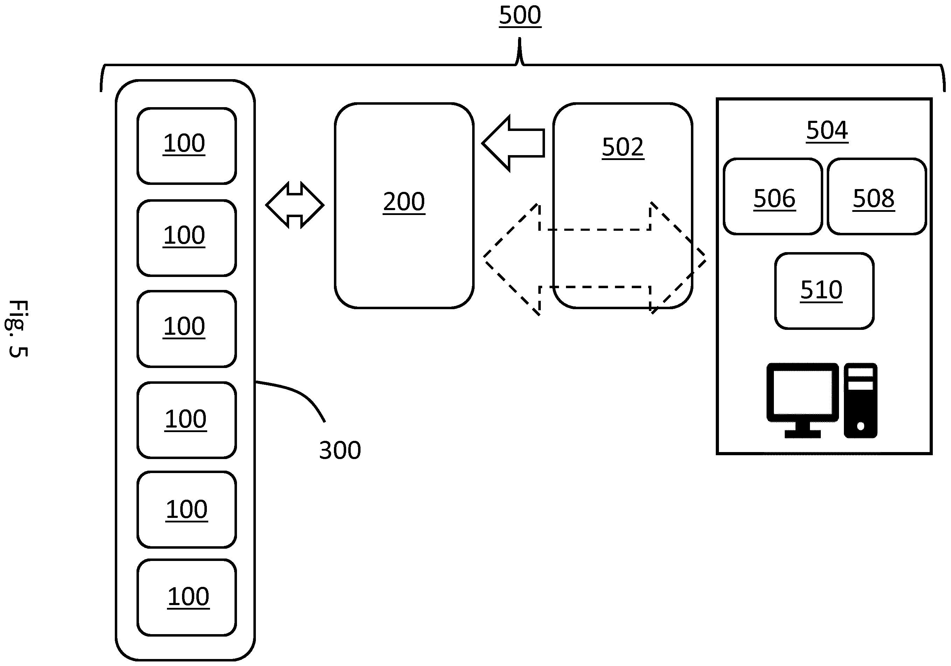

A tire monitoring system 500 that utilises the tire pressure sensor network 300 is illustrated schematically in Figure 5, and comprises the tire pressure sensor network 300 formed of a plurality of tire monitoring devices 100, the remote device 200, a remote memory 502 and a remote processing system 504.

The remote memory 502 is disposed remotely from the tire pressure sensor network 300, and hence the plurality of aircraft tire monitoring devices 100, and the remote device 200, and comprises any memory device capable of storing data such that stored data is accessible to the remote device 200. In some examples the remote memory 502 can comprise a database or the like, for example hosted on a server remote from the tire pressure sensor network 300, and hence the plurality of aircraft tire monitoring devices 100, and the remote device 200. In some examples the remote memory 502 can comprise part of the remote device 200. Similarly, whilst one memory is illustrated, it will be appreciated that in practice the memory may comprise multiple memory devices, for example distributed across physical and/or virtual locations. The remote memory 502 stores a list of pre-determined relationships between unauthorised interactions and maintenance messages, as will be discussed in more detail hereinafter.

The remote processing system 504 is disposed remotely from the tire pressure sensor network 300, and hence the plurality of aircraft tire monitoring devices 100, and the remote device 200. The remote processing system 504 comprises a processor 506, a display device 508 and a memory 510. Whilst illustrated as a single processor 506, the remote processing system 504 may comprise more than one processor in practice, and similarly the system can additionally or alternatively comprise a plurality of remote processing systems 504 such as a server farm. The display device 508 can comprise a screen capable of displaying a graphical user interface to a user of the remote processing system 504. The memory 510 can comprise any suitable memory device, and stores instructions that, when executed, control the processor 502 to perform various actions.

In use of the tire monitoring system 500, each of the respective aircraft tire monitoring devices 100 is configured to wake-up every 10 minutes to measure pressure and temperature values using the respective pressure sensor 110 and temperature sensor 112. Such measured pressure and temperature values are stored in the respective first storage 114 of the aircraft tire monitoring device 100, i.e. in local memory of the aircraft tire monitoring device 100. When a tire pressure check is performed, for example once the aircraft tire monitoring devices 100 are connected to the remote device 200 following an appropriate request or command 408 in accordance with the method 400 described above, the remote device 200 obtains the measured pressure and temperature values from the first storage 114 of the respective aircraft tire monitoring devices 100.

The discussion that follows is provided in relation to one aircraft tire monitoring device 100 of the network 300, but it will be appreciated that the same can be applied to each aircraft tire monitoring device 100 of the network 300.

Throughout the operational lifetime of the aircraft tire monitoring device 100, the processor 102 is configured to monitor the tire monitoring device 100 to determine unauthorised interactions with the tire monitoring device 100.

Such unauthorised interactions can include any attempt to compromise the tire pressure sensor network 300, or any of the individual tire monitoring devices 100, with unauthorised interactions including those interactions which cause operator nuisance or interrupts, and denial-of-service attacks.

The processor 102 can determine an unauthorised interaction by monitoring characteristics of operation of the tire monitoring device 100. For example, performance of constant tire pressure checks can be considered abnormal, and can be considered indicative of unauthorised interactions with the tire monitoring device 100 to cause operator nuisance or interruption. Similarly, tire pressure checks typically would not be expected to occur when the aircraft 302 is in-flight, and a tire pressure check that does occur when the aircraft 302 is in-flight can be considered indicative of an unauthorised interaction with the tire monitoring device 100. A further example of a characteristic of operation of the tire monitoring device 100 that can be indicative of an unauthorised interaction with the tire monitoring device 100 can be repeated loss of connection between the remote device 200 and the tire pressure sensor network 300 during a tire pressure check.

In some examples, the processor 102 can carry out monitoring during establishment of secure communications amongst the tire monitoring devices 100 of the tire pressure sensor network 300, for example during set-up and exchange of appropriate cryptographic keys between the tire monitoring devices 100.

The monitoring carried out by the processor 102 can be carried out by the processor itself, or the processor 102 can cause checks to be performed by one or more pieces of built-in test equipment (BITE - not shown). Such monitoring can be conducted in accordance with standards such as RFC5224 and ARINC 852 at the priority date of the present application, and in accordance with authentication, authorization and accounting (AAA) procedures, including the Diameter protocol.

Where an unauthorised interaction is determined by the processor 102, the processor 102 causes an indication of the unauthorised interaction to be stored in the first storage 114 as part of a log. The indication is stored alongside a timestamp from the time source 118. Alternatively, each interaction with the tire monitoring device 100 can be stored in the first storage 114 alongside an appropriate timestamp, with an indication as to whether the interaction is determined as authorised or unauthorised by the processor 102.

When a legitimate, authorised, tire pressure check is performed by an operator using the remote device 200, the processor 102 determines a remaining capacity of the storage 114. If the remaining capacity is greater than 20%, the tire pressure check is performed as normal, with the remote device 200 obtaining the measured pressure and temperature values from the first storage 114 of the respective aircraft tire monitoring devices 100.

If, instead, the remaining capacity is less than or equal to 20%, the tire pressure check is still performed, but the processor 102 also causes a memory capacity signal to be transmitted to the remote device 200. The memory capacity signal causes an indication that the log needs to be downloaded to be displayed to the operator via the display 204 of the remote device 200. The operator can then request, via the input system 206 of the remote device 200, download of the log from the first storage 114. In response, the processor 102 causes transmission of a signal that encodes the log to the remote device 200.

In some examples, once the log is received at the remote device 200, the remote device 200 can process the log to determine a maintenance message to be displayed to the operator of the remote device. To process the log, the processor 202 of the remote device 200 can query the remote memory 502. The processor 202 utilises the list of pre-determined relationships between unauthorised interactions and maintenance messages stored in the remote memory 502 to determine a maintenance message associated with the unauthorised interactions determined by the processor 102 of the tire monitoring device 100. Such a maintenance message can take the form of a reference to a particular section of an aircraft maintenance manual (AMM) associated with individual ones, or combinations of, the unauthorised interactions in question, such that an operator of the remote device 200 knows how to proceed with an appropriate remedial action. The maintenance message is then displayed on the display 204 of the remote device 200.

In such a manner, the tire monitoring system 500 can function similarly to a conventional avionics system, in spite of the aircraft tire monitoring device 100 being unconnected to any avionics system onboard the aircraft 302. In particular, the combination of the aircraft tire monitoring device 100 and the remote device 200 can be utilised to determine unauthorised interactions with the aircraft tire monitoring device 100, or components thereof, and to direct an operator of the remote device 200 to the relevant section of the AMM so that appropriate remedial action can be taken. This is in spite of the tire monitoring devices 100 not being connected to any conventional aircraft avionics system.

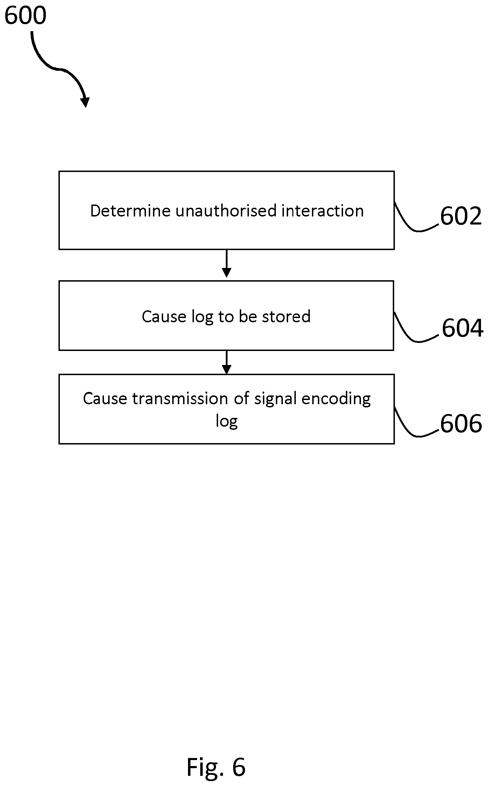

A method 600 in accordance with the above is illustrated in the flow diagram of Figure 6. The method 600 comprises, at the tire monitoring device 100, monitoring 602 the tire monitoring device 100 to determine unauthorised interactions with the tire monitoring device 100. The method 600 comprises causing 604 a log of determined unauthorised interactions to be stored in the first storage 114 of the tire monitoring device 100. The method 600 comprises causing 606 transmission of a signal encoding an indication of the log to the remote device via the wireless communication interface 104 of the tire monitoring device.

Once downloaded from the tire monitoring device 100, the log is deleted from the first storage 114 to free capacity for further future logs to be recorded. In some examples, reconfiguration of the tire monitoring device 100, for example if the tire monitoring device 100 is moved to a new wheel or new aircraft, can also cause the log to be deleted.

In some examples, when processing the log, the remote device 200 can process the timestamps recorded in the log to determine a date and time at which any unauthorised interaction with the tire monitoring device 100 occurred. This can enable the unauthorised interaction to be linked to a particular flight and/or flight phase. As an example, if an unauthorised interaction is recorded in the log with a timestamp of 47304000, and the time source has a value of 47308600 when download of the log occurs, it can be determined that the unauthorised interaction occurred 4600 seconds ago. The current date and time are known by the remote device 200, and so the date and time, and location, at which the unauthorised interaction occurred can be determined.

In some examples, the maintenance message can comprise a direction for the operator to transmit the signal encoding the log to the remote processing system 504. In some such examples, processing of the log by the processor 202 of the remote device 200 can be minimal. The remote device 202 can utilise the wireless communications interface 210 to transmit the signal encoding the log, or a further signal derived from the signal encoding the log, to the remote processing system 504.

The remote processing system 504 can, in some examples, display information derived from the signal encoding the log using the display device 508. An operator of the remote processing system 504 can then utilise such information to determine an appropriate remedial action given the unauthorised interaction(s) with the tire monitoring device 100. The operator can schedule a maintenance action so that the remedial action can be taken, and/or can cause a signal encoding the remedial action to be transmitted to and displayed on the remote device 200.

In some examples, the remote processing system 504 can process the information from the log to determine a recommended remedial action. The remote processing system 504 can then schedule a recommended maintenance action based on the recommended remedial action, and/or cause a recommended maintenance action to be displayed to an operator of the remote processing system 504, and/or cause a signal encoding the remedial recommended maintenance action to be transmitted to and displayed on the remote device 200.

Variations of the manner in which the log is transmitted from the tire monitoring device 100 to the remote device 200 are also envisaged. In some examples, the log can be downloaded by the remote device 200 every time a tire pressure check is requested by the remote device. In some examples an operator of the remote device 200 can initiate a download of the log from the first storage at any point the operator chooses, via use of the input system 206 of the remote device 200. In some examples the entries of the log can be assigned a priority level, and in response to a request for a tire pressure check made via the remote device 200, the processor 102 of the tire monitoring device 100 can determine whether any relatively high priority unauthorised interactions are stored in the log. If relatively high priority unauthorised interactions are present in the log, the tire monitoring device 100 can transmit a signal indicating this to the remote device 200, with the remote device indicating such on the display device 208. An operator of the remote device 200 can then initiate a download of the log in a similar manner to that previously described. In some examples where a capacity for the log in the first storage 114 is reached before any download of the log can occur, older log entries can be deleted in view of newer entries.

It will be appreciated that any of the processing of the log that occurs at the remote device 200 can be performed at the remote processing system 504, or vice versa.

It is to noted that the term "or" as used herein is to be interpreted to mean "and/or", unless expressly stated otherwise.

## Claims

1. A tire monitoring system comprising:
a tire monitoring device comprising:
a processor;
a memory; and
a first wireless communication interface; and
a remote device comprising a second wireless communication interface;
wherein the processor is configured to:
monitor the tire monitoring device to determine unauthorised interactions with the tire monitoring device;
cause a log of determined unauthorised interactions to be stored in the memory; and
cause transmission of a signal encoding the log to the remote device via the first and second wireless communication interfaces.

2. The tire monitoring system according to Claim 1, wherein the processor is configured to cause transmission of the signal encoding the log to the remote device in response to a download request from the remote device.

3. The tire monitoring system according to Claim 1 or Claim 2, wherein:
the remote device is configured to transmit, via the second wireless communication interface, a tire check request to the tire monitoring device;
the processor is configured to cause a memory capacity signal indicative of remaining capacity of the memory to be transmitted, via the first wireless communication interface, to the remote device;
the remote device is configured to transmit, via the second wireless communication interface and based on receipt of the memory capacity signal, a download request to the tire monitoring device; and
the processor is configured to cause transmission, via the first wireless communication interface and in response to receipt of the download request, transmission of the signal encoding the log to the remote device, and optionally wherein the processor is configured to cause the memory capacity signal to be transmitted to the remote device where an available capacity of the memory for storing further entries of the log is less than or equal to 30%.

4. The tire monitoring system according to any one of Claims 2 or 3, wherein the remote device is configured to transmit the download request in response to an operator input on the remote device.

5. The tire monitoring system according to any one of the preceding claims, wherein the processor is configured to cause each determined unauthorised interaction in the log to be stored in the memory alongside an associated timestamp indicative of a time at which the determined unauthorised interaction occurred, and optionally wherein the tire monitoring device comprises a counter, and the associated timestamp comprises a value of the counter at a time at which the determined unauthorised interaction occurred, and optionally wherein the remote device is configured to, in response to receipt of the signal encoding the log, correlate each value of the counter with a corresponding date and time.

6. The tire monitoring system according to any one of the preceding claims, wherein the processor is configured to, once the signal encoding the log has been transmitted to the remote device, cause deletion of the log from the memory.

7. The tire monitoring system according to any one of the preceding claims, wherein the remote device comprises a display, and the remote device is configured to provide, using the display and in response to receipt of the signal encoding the log, a maintenance message to an operator of the remote device, and optionally wherein the maintenance message comprises a message that directs an operator of the remote device to a section of an aircraft maintenance manual, and optionally wherein the maintenance message comprises a message that directs an operator of the remote device to transmit the signal to a remote processing system.

8. The tire monitoring system according to any one of the preceding claims, wherein the tire monitoring system comprises a remote processing system, the remote device is configured to transmit the signal, or a further signal derived from the signal encoding the log, to the remote processing system, and the remote processing system is configured to process the signal to determine a maintenance action associated with at least one of the determined unauthorised interactions with the tire monitoring device.

9. The tire monitoring system according to any one of the preceding claims, wherein the tire monitoring system comprises an aircraft having a tire, and the tire monitoring device is mounted to the tire, and optionally wherein the tire monitoring device is not communicatively coupled to an avionics system of the aircraft.

10. A method comprising, at a tire monitoring device:
monitoring the tire monitoring device to determine unauthorised interactions with the tire monitoring device;
causing a log of determined unauthorised interactions to be stored in a memory of the tire monitoring device; and
causing transmission of a signal encoding an indication of the log to a remote device via a wireless communication interface of the tire monitoring device.

11. The method according to Claim 10, wherein the method comprises causing transmission of the signal encoding the log to the remote device in response to a download request from the remote device.

12. The method according to Claim 10 or Claim 11, wherein the method comprises:
receiving, via the wireless communication interface, a tire check request sent to the tire monitoring device by the remote device;
transmitting, from the tire monitoring device and in response to the tire check request, a memory capacity signal indicative of remaining capacity of the memory to the remote device via the wireless communication interface;
receiving, via the wireless communication interface, a download request from the remote device based on receipt of the memory capacity signal by the remote device; and
transmitting, via the wireless communication interface and in response to receipt of the download request, the signal encoding the log from the tire monitoring device to the remote device.

13. The method according to any one of Claims 10 or 12, wherein the method comprises transmitting the memory capacity signal to the remote device where an available capacity of the memory of the tire monitoring device for storing further entries of the log is less than or equal to 30%.

14. A tire monitoring device comprising:
a processor;
a memory; and
a wireless communication interface;
wherein the processor is configured to:
monitor the tire monitoring device to determine unauthorised interactions with the tire monitoring device;
cause a log of determined unauthorised interactions to be stored in the memory; and
cause transmission of a signal encoding the log to a remote device via the wireless communication interface.

15. A data carrier comprising machine readable instructions that, when executed, cause a processor of a tire monitoring device to:
monitor the tire monitoring device to determine unauthorised interactions with the tire monitoring device;
cause a log of determined unauthorised interactions to be stored in a memory of the tire monitoring device; and
cause transmission of a signal encoding the log to a remote device via a wireless communication interface of the tire monitoring device.
